# EUROPÄISCHE PATENTSCHRIFT

(11) **EP 0 552 853 B1**
(45) Veröffentlichungstag und Bekanntmachung des Hinweises auf die Patenterteilung: **27.05.1998**
(21) Anmeldenummer: 93250017.6
(22) Anmeldetag: 18.01.1993
(51) Int. Cl.: A01N 43/50, A01N 35/02

(54) **Stabilisiertes aldehydisches Desinfektions- und Konservierungsmittel**
Stabilized aldehydic disinfectant and preservative
Desinfectant et produit conservateur aldéhydique stabilisé

(30) Priorität: 21.01.1992 DE 4201391
(43) Veröffentlichungstag der Anmeldung: 28.07.1993
(73) Patentinhaber: Schülke & Mayr GmbH, 22851 Norderstedt (DE)
(72) Erfinder: Eggensperger, Heinz, Dr., W-2000 Hamburg 65 (DE); Beilfuss, Wolfgang, Dr., W-2000 Hamburg 63 (DE)
(74) Vertreter: UEXKÜLL & STOLBERG

(56) Entgegenhaltungen:
- EP-A- 0 014 443
- EP-A- 0 132 038
- EP-A- 0 158 374
- US-A- 3 987 184
- US-A- 4 454 133
- US-A- 4 920 141
- PATENT ABSTRACTS OF JAPAN vol. 9, no. 211 (C-300)(1934) 29. August 1985 & JP-A-60 075 465 ( MITSUI TOATSU ) 27. April 1985
- CHEMICAL ABSTRACTS, vol. 97, no. 13, 27. September 1982, Columbus, Ohio, US; abstract no. 110366j, N.P.VYALKINA ET AL. 'Study of the reaction of glutaraldehyde with some amino acids' Seite 650 ;Spalte 1 ;

## Beschreibung

Die Erfindung betrifft stabilisierte aldehydische Desinfektions- und Konservierungsmittel.

Aldehyde sind wirksame Mikrobizide mit breitem Wirkungsspektrum und besonders guter Wirksamkeit im pH-Bereich oberhalb 7. Insbesondere Glutardialdehyd besitzt eine hervorragende keimhemmende und keimtötende Wirksamkeit. Sein Wirkungsspektrum erstreckt sich auf Bakterien, Pilze, Mykobakterien, Viren, Sporen u.a. Darüber hinaus ist eine gute Wirkung gegen Parasiten, wie zum Beispiel gegen Ascariden oder Coccidien bzw. deren Dauerformen, gegeben. Am besten ist seine Wirkung im schwach-alkalischen pH-Bereich, nämlich bei pH-Werten von 7 bis 9 und insbesondere 7,5 bis 8,5.

Handelsübliche aldehydische Desinfektionsmittel sind im allgemeinen Konzentrate, die sich in Wasser mit neutraler bzw. schwach-saurer Reaktion lösen. Leider verändern sich aldehydhaltige Präparate im Laufe der Lagerung, was beispielsweise zu Farbvertiefung, Veränderung des pH-Wertes und Abnahme des Aldehydgehaltes führen kann. Dies gilt insbesondere für alkalisch eingestellte Aldehydlösungen und zwar sowohl für Konzentrate als auch für Gebrauchsverdünnungen. Es liegt auf der Hand, daß derartige Veränderungen insbesondere im Falle von Arzneimitteln und Desinfektionsmitteln nicht zu tolerieren sind.

Um die gute Wirksamkeit alkalischer Aldehydlösungen nutzbar zu machen, werden deshalb Zwei-Komponenten-Präparate eingesetzt, die zum Beispiel aus einer 2 %-igen wäßrigen Glutardialdehydlösung bestehen und vor Gebrauch mit einem Aktivator (einer alkalischen Pufferlösung, z.B. mit NaHCO₃ als Alkalisierungsmittel) versetzt werden (siehe hierzu die US-PS 3 016 328 sowie die auf die gleiche Priorität zurückgehenden DE-PS 1 117 262, DE-PS 1 165 208 und DE-OS 1 492 326). Die Haltbarkeit dieser Lösungen bei Raumtemperatur wird mit 14 bis 30 Tagen angegeben. Gemäß EP 0 066 759 A1 kann die pH-Wertstabilität derartiger Lösungen durch Zusatz von einem oder mehreren zusätzlichen Puffern verbessert werden.

Der Nachteil derartiger Zwei-Komponenten-Präparate besteht darin, daß sie umständlich zu handhaben und in der Anwendung nicht sehr sicher sind. Da es sich praktisch um Gebrauchslösungen und nicht um Konzentrate handelt, entstehen hohe Transportkosten.

Auch bei einer frisch angesetzten aktivierten Glutardialdehydlösung, die zum Beispiel zur Inaktivierung bestimmter Sporen Einwirkzeiten von bis zu 12 Stunden benötigt, kann es aufgrund von Wirkstoffabnahme oder pH-Veränderung zu Einbußen bei der Desinfektionssicherheit kommen.

Es hat deshalb nicht an Versuchen gefehlt, lagerstabile, schwach-alkalische bis alkalische oder zumindest neutrale aldehydhaltige Lösungen und insbesondere glutardialdehydhaltige Lösungen für Desinfektions- oder Konservierungszwecke zur Verfügung zu stellen.

So wird in CA 91: 4492v eine etwa 22 %-ige Glutardialdehydlösung beschrieben, die einen alkalischen Aktivator und 0,01 bis 0,25 % Hydrochinon als Stabilisator enthält. Es wird berichtet, daß die Zersetzung des Glutardialdehyds nach 14 Tagen bei +5°C und einem pH-Wert von 7,5 bis 8,5 auf 24 % reduziert werden konnte. Abgesehen von der für den praktischen Einsatz immer noch unbefriedigenden Stabilität führt ein Zusatz von Hydrochinon zu Verfärbungen und ist auch toxikologisch nicht unbedenklich.

In der US-PS 3 282 775 bzw. der entsprechenden DE-OS 1 492 331 werden wäßrige oder wäßrig-alkoholische sporizide Mittel auf Basis gesättigter Dialdehyde mit 2 bis 6 Kohlenstoffatomen und kationischen Tensiden offenbart. Diese Lösungen haben im allgemeinen einen sauren pH-Wert, so daß alkalische Reagenzien oder Puffer, wie Alkalicarbonate, -bicarbonate, -phosphate und -borate oder gewisse Amine zugesetzt werden müssen, um den pH-Wert der fertigen Lösung in den gewünschten Bereich von 4,0 bis 9,0 und insbesondere 5,0 bis 8,0 einzustellen. Hervorgehoben werden Wirksamkeit und Stabilität der offenbarten Formulierungen. Beispiele für geeignete kationische Tenside sind Fettamine wie Dodecylamin, Fettsäureamidderivate von aliphatischen Diaminen, Aminoalkoholen und Benzimidazolinen, quaternäre Ammoniumverbindungen wie Laurylpyridiniumsulfat, Benzalkoniumchlorid und andere.

Derartige Formulierungen besitzen jedoch eine Reihe von Nachteilen (kein Einsatz in CIP-Anlagen möglich). So neigen die kationischen Tenside zu Schaumbildung. Außerdem sind sie überwiegend mit anionischen Tensiden, wie sie in Reinigungsmitteln verwendet werden, unverträglich. Ferner neigen sie zu Adsorption an Oberflächen und daraus resultierender unzureichender Abspülbarkeit. Schließlich wird die biologische Abbaubarkeit der kationischen Tenside in Fachkreisen kontrovers diskutiert.

Ferner sind in CA 98: 77551m geruchsverhindernde Beschichtungslösungen beschrieben, die unter anderem Glyoxal und 2-(4-Thia-zolyl)-benzimidazol, ein breit wirksames systemisches Fungizid, enthalten. Eine Stabilisierung dieser aldehydischen Lösung durch eine der angegebenen Komponenten ist nicht erwähnt.

Aus der EP-A-0 132 038 ist eine Zusammensetzung bekannt, die Formaldehyd und Glutaraldehyd in alkoholischem Lösungsmittel enthalten. Gemäß der Offenbarung von Beispiel 2 ist eine solche Formulierung beispielsweise mit Imidazol als Alkalisierungsmittel auf einen pH-Wert von 8 bis 8,5 eingestellt worden.

In der US-A-4 454 133 ist ein Verfahren zur Herstellung von Kondensationsprodukten aus Glutaraldehyd und Stickstoff enthaltenden Verbindungen, nämlich linearen oder cyclischen Amiden oder Imiden, beschrieben. Unter die Stickstoff enthaltenden Verbindungen fallen auch Imidazolderivate wie Imidazolone. Bei den beschriebenen Stickstoff enthaltenden Verbindungen handelt es sich ausnahmslos um solche, die in α-Stellung zu mindestens einer NH-Gruppe eine Carbonylgruppe aufweisen.

In der US-A-4 920 141 sind synergistisch wirkende Bakterizidmischungen aus Nitroimidazolen bzw. deren Salzen und Aldehyden wie Glutaraldehyd beschrieben. Der Zweck dieser Wirkstoffkombination liegt eindeutig in der Verbesserung der Wirkung nicht aber in ihrer Langzeitstabilisierung. Eine stabilisierende Wirkung durch die Nitroimidazole wird wird nicht erwähnt.

Der Erfindung liegt dementsprechend die Aufgabe zugrunde, ein stabilisiertes aldehydisches Desinfektions- und Konservierungsmittel zu schaffen, das die Nachteile von Zwei-Komponenten-Präparaten vermeidet, aber dennoch eine gute Stabilität aufweist und die Einstellung des gewünschten pH-Werts bereits bei der Herstellung und nicht erst bei der Anwendung gestattet.

Zur Lösung dieser Aufgabe wird ein stabilisiertes aldehydisches Desinfektions- und Konservierungsmittel vorgeschlagen, das dadurch gekennzeichnet ist, daß es als Stabilisator Imidazolderivat enthält, das Substituentengruppen mit bis zu 18 Kohlenstoffatomen aufweist und wobei das Mittel, wenn es in Form einer Gebrauchslösung vorliegt, 0,05 bis 1 Gew.-% des Stabilisators enthält und, wenn es in Form eines Konzentrats vorliegt, 0,5 bis 5 Gew.-% des Stabilisators enthält.

Bevorzugte Ausführungsformen der Erfindung ergeben sich aus der nachfolgenden Beschreibung und den Unteransprüchen.

Die Erfindung beruht auf der überraschenden Erkenntnis, daß Imidazol und bestimmte Imidazolderivate gleichzeitig als Alkalisierungsmittel bzw. Aktivator und als Stabilisator in aldehydischen Desinfektions- und Konservierungsmitteln fungieren können. Dies ist besonders überraschend, da in der Literatur über die Reaktion von Glutardialdehyd mit der Imidazolgruppe von Histidin im pH-Bereich von 2 bis 8 berichtet wird (CA 102: 47681n; CA 97: 110366j). Ferner wird in der Literatur (Praxis der Sterilisation-Desinfektion-Konservierung, Karl-Heinz Wallhäußer, 4. Auflage, Georg Thieme-Verlag Stuttgart, New York, 1988, Seiten 465 bis 466) berichtet, daß Glutardialdehyd durch Ammoniak und primäre Amine im neutralen und basischen pH-Bereich inaktiviert wird. Weiterhin ist bekannt, daß Glutardialdehyd in Gegenwart von Glycin inaktiviert wird (S.S. Block, Disinfection, Sterilization and Preservation, 4. Auflage, 1991, Seite 607). Schließlich wird das einen Imidazolring enthaltende Histidin als Enthemmungsmittel (Neutralisation der Wirkstoffe) bei der Desinfektionsmittel-Wirksamkeitsprüfung eingesetzt. Es war deshalb um so überraschender, daß in den erfindungsgemäßen Formulierungen Imidazol in Gegenwart von Alkoholen stabilisierend auf Glutardialdehyd wirkt.

Es hat sich gezeigt, daß die stabilisierende Wirkung von Imidazolderivaten besonders in wasserarmen Zubereitungen zum Tragen kommt. Dementsprechend ist es bevorzugt, den Wassergehalt des erfindungsgemäßen Desinfektions- und Konservierungsmittels möglichst niedrig zu halten, indem das Wasser ganz oder teilweise durch Lösungsmittel ersetzt ist.

Besonders vorteilhaft ist, daß das erfindungsgemäße Desinfektions- und Konservierungsmittel als Konzentrat hergestellt werden kann, das selbst eine ausgezeichnete Stabilität besitzt und durch einfaches Verdünnen mit Wasser eine aktivierte aldehydische Wirkstofflösung mit ausgezeichneter Haltbarkeit ergibt.

Ein weiterer Vorteil des erfindungsgemäßen Desinfektions- und Konservierungsmittels besteht darin, daß sie aufgrund der verringerten Flüchtigkeit der Aldehyde weniger stark riechen. Das gleiche gilt für den erfindungsgemäßen Stabilisator Imidazolderivat im Vergleich zu den in der US-PS 3 016 328 vorgeschlagenen Aminen, die verhältnismäßig flüchtig sind und einen störenden Geruch besitzen. Auch besteht bei einigen die Gefahr der Nitrosaminbildung bei Reaktion mit N-Verbindungen hoher Oxidationszahl.

Die im erfindungsgemäßen Desinfektions- und Konservierungsmittel verwendbaren Aldehyde sind dem Fachmann wohl bekannt. Hierbei handelt es sich um aliphatische oder aromatische C₁-C₈-Mono- oder Dialdehyde. Beispiele für geeignete Aldehyde sind Formaldehyd, Glyoxal, Succindialdehyd, Oxybisacetaldehyd, Glutardialdehyd und o-Phthaldialdehyd. Bevorzugt sind Succindialdehyd, Glutardialdehyd und o-Phthaldialdehyd. Besonders bevorzugt ist Glutardialdehyd.

Die geeigneten Aldehyde sind hauptsächlich handelsübliche Stoffe oder Lösungen (überwiegend wässrige Lösungen); sie können in einer bevorzugten Ausführungsform nach bekannten Methoden aus Aldehydvorstufen, z.B. Voll-, Halb- oder cyclischen Halbacetalen hergestellt werden (siehe z.B. EP 0 066 224 B1). Durch entsprechende Reaktionsführung können weitgehend wasserarme Formulierungen erhalten werden. Gegebenenfalls können Wasser und/oder Hydrolysenebenprodukte nach bekannten Verfahren entfernt werden. Beispielsweise können Wasser so wie niedere Alkohole, wie Methanol, durch Destillation oder Vakuumdestillation ganz oder teilweise entfernt werden. Besonders vorteilhaft ist die Entfernung des Wassers durch die sog. Pervaporation.

Als Stabilisator können Imidazol und/oder Imidazolderivate verwendet werden. Die geeigneten Imidazolderivate sind Alkylimidazole, Hydroxyalkylimidazole, Arylakylimidazole, Arylhydroxyalkylimidazole, Benzimidazol, alkylsubstituierte Benzimidazole mit bis zu 6 Kohlenstoffatomen in der Alkylkette und hydroxyalkylsubstituierte Benzimidazole mit bis zu 6 Kohlenstoffatomen in der Alkylkette. Die Alkylgruppen in den zuvor genannten Imidazolderivaten können substituiert sein, zum Beispiel durch eine oder mehrere Hydroxygruppen.

Die Lösungsmittelkomponente besteht aus Wasser und/oder Lösungsmittel ausgewählt aus Alkoholen, Ethern, Acetalen und/oder Amiden. Es ist erfindungsgemäß bevorzugt, daß möglichst viel Wasser durch Lösungsmittel ersetzt wird, so daß wasserarme Zubereitungen mit einem Wassergehalt von weniger als 50 Gew.-%, insbesondere weniger als 20 Gew.-%, vorzugsweise weniger als 10 Gew.-% und besonders bevorzugt weniger als 5 Gew.-% erhalten werden.

Als Alkohole eignen sich aliphatische Alkohole mit bis zu 16 Kohlenstoffatomen (Mono-, Di-, Tri- oder Polyhydroxyverbindungen), aromatische Alkohole mit bis zu 10 Kohlenstoffatomen, Glykole und Glykolether. Beispiele für aliphatische Alkohole sind Ethanol, n-Propanol, i-Propanol, 2-Ethylhexanol, 2-Ethylhexenol, n-Decanol, Tetrahydrofurfurylalkohol, Sorbitol und Glycerin. Beispiele für aromatische Alkohole sind Benzylalkohol, 2-Phenylethylalkohol, α-Methylbenzylalkohol, Phenylpropanole und Phenylbutanole, wobei die Verbindungen am aromatischen Ring oder in der Alkylkette substituiert sein können. Beispiele für Glykole sind Ethylenglykol, Propylenglykole, Butylenglykole, Diethylenglykol, Triethylenglykol, Tetraethylenglykol, Polyethylenglykole, Dipropylenglykol, Diglycerin, Triglycerin und Polyglycerin. Beispiele für Glykolether sind Phenoxyethanol, Phenoxydiethylenglykol, Phenoxytriethylenglykol, Phenoxytetraethylenglykol, Phenoxypolyethylenglykol, Phenoxypropanole, Phenoxybutanole, wobei der aromatische Ring auch substituiert sein kann, Butylglykol, Butyldiglykol, Hexylglykole, Octylglykole und Decylglykole.

Bevorzugt sind Ethanol, i-Propanol, n-Propanol, Phenoxyethanol, Phenoxytetraethylenglykol, Gemische aus 1-Phenoxypropanol-2 und 2-Phenoxypropanol-1, Diethylenglykol, Triethylenglykol, Polyethylenglykol, 1,2-Propylenglykol und Butyldiglykol. Besonders bevorzugt sind i-Propanol, Phenoxytetraethylenglykol und Triethylenglykol.

Neben oder anstelle der Alkohole kann man auch Ether, Acetale oder Amide verwenden, bevorzugt wasserlösliche oder wassermischbare. Geeignet sind beispielsweise Tetrahydrofuran, Dimethylformamid, 2,5-Diethoxytetrahydrofuran, 2-Methoxydihydropyran, Diethylenglykol-dimethylether, Triethylenglykol-dimethylether, Tetraethylenglykol-dimethylether, N-Methylpyrrolidon-2, N-Cyclohexylpyrrolidon-2 und N-2-Hydroxyethylpyrrolidon-2. Bevorzugt sind jedoch die Alkohole.

Die oben erläuterten Stoffgruppen (Aldehyd, Stabilisator und Lösungsmittel) können als Einzelstoffe oder Stoffgemische vorliegen, wobei Gemische häufig wirksamer als Einzelstoffe sind.

Die pH-Werte der erfindungsgemäßen Zubereitungen liegen im Bereich von 3 bis 10. Dabei kommen die Vorteile der erfindungsgemäßen Stabilisierung im Vergleich zum Stand der Technik besonders im pH-Bereich von 5 bis 9, vorzugsweise 6 bis 9 und insbesondere 7 bis 8,7 zum Tragen, d.h. in den pH-Bereichen, in denen aldehydische Desinfektions- und Konservierungsmittel am wirksamsten, aber ohne die erfindungsgemäße Stabilisierung auch am instabilsten sind. Im Falle von Konzentraten und wasserarmen Zubereitungen mit hohem Anteil an organischem Lösungsmittel erfolgt die Bestimmung des pH-Werts nach geeigneter Verdünnung mit Wasser (meist auf einen Konzentratgehalt von 1 Gew.-%), da in wasserarmen organischen Lösungsmitteln mit Standard-pH-Elektroden nur wenig reproduzierbare pH-Werte zu ermitteln sind.

Die erfindungsgemäßen Zubereitungen können als Konzentrate mit Wasser oder Alkoholen wie zum Beispiel Ethanol, Isopropanol oder n-Propanol zu Gebrauchslösungen verdünnt oder als fertige Desinfektionsmittel eingesetzt werden. Bei Verwendung als Konservierungsmittel werden die Zubereitungen den zu konservierenden Stoffen zugemischt.

Wenn das erfindungsgemäße Desinfektions- und Konservierungsmittel als Gebrauchslösung beispielsweise als Sprühdesinfektionsmittel vorliegt, enthält es gewöhnlich 0,05 bis 2 Gew.-% Aldehyd, 0,05 bis 1 Gew.-% Stabilisator und im übrigen Lösungsmittelkomponente, die vorzugsweise überwiegend aus Lösungsmitteln wie leicht flüchtigen Alkoholen (z.B. Ethanol, Isopropanol usw.) besteht.

Wenn das erfindungsgemäße Desinfektions- und Konservierungsmittel als Konzentrat vorliegt, enthält es üblicherweise 1 bis 20 Gew.-% und vorzugsweise 5 bis 10 Gew.-% Aldehyd, 0,5 bis 5 Gew.-% und vorzugsweise 1 bis 3 Gew.-% Stabilisator und im übrigen Lösungsmittelkomponente mit möglichst geringem Wassergehalt. Im Falle von o-Phthaldialdehyd reichen in Abhängigkeit vom Anwendungszweck häufig auch Konzentrationen die unter 1 Gew.% liegen. Wie bereits oben erwähnt, können die Konzentrate durch Verdünnung mit Wasser oder Alkoholen gebrauchsfertig gemacht werden. Zu diesem Zweck kann beispielsweise 1 Teil Konzentrat mit 20 bis 400 Teilen Wasser oder Alkohol verdünnt werden. Üblicherweise wird 1 Teil Konzentrat mit 50 bis 200 Teilen Wasser oder Alkohol verdünnt.

Zusätzlich zu den oben beschriebenen Komponenten kann das erfindungsgemäße Desinfektions- und Konservierungsmittel herkömmliche Alkalisierungsmittel (vgl. den oben diskutierten Stand der Technik), Hilfsstoffe, Zusatzstoffe und/oder Wirkstoffe enthalten. So empfiehlt sich der Zusatz von anorganischen Alkalisierungsmitteln (z.B. NaHCO₃) bei Verwendung in durch den Leitfähigkeitswert gesteuerten Dosieranlagen. Als Hilfs- und Zusatzstoffe sind beispielsweise Tenside, Korrosionsschutzmittel, Parfum, Farbstoffe und Komplexbildner zu nennen. Durch Kombination mit anderen Wirkstoffen kann in Abhängigkeit vom Anwendungszweck ein breiteres Wirkungsspektrum (z.B. algizide Wirkung bei kationenaktiven Verbindungen), aber auch eine synergistische WirkungsSteigerung (z.B. beim Kombination mit kationenaktiven Verbindungen) erzielt werden. Derartige Verbindungen sind zum Beispiel Phenole wie o-Phenylphenol, p-Chlor-m-kresol, Thymol, Salicylsäure, o-Cymen-5-ol, 4-Chlor-3,5-dimethylphenol, Chlorophen, Dichlorophen und Bromchlorphen. Weitere Beispiele für kationenaktive Wirkstoffe sind Benzalkoniumchlorid, Didecyldimethylammoniumchlorid, Polyhexamethylenbiguanid, Cocospropylendiaminguanidiniumdiacetat und Octenidin. Beispiele für andere Wirkstoffe sind Benzisothiazolon, 2-Mercaptopyridin-N-oxid und deren Salze sowie Pyriondisulfid. Der Anteil dieser zusätzlichen Komponenten im erfindungsgemäßen Desinfektions- und Konservierungsmittel kann zwischen 0,5 und 20 Gew.-% liegen.

Das erfindungsgemäße Desinfektions- und Konservierungsmittel ist lagerstabil und besitzt eine hohe mikrobizide Wirksamkeit sowie ein breites Wirkungsspektrum. Neben Bakterien, Hefen und Pilzen werden insbesondere schwer zu inaktivierende Mykobakterien, Viren und Sporen wirksam bekämpft. Gegenüber handelsüblichen Präparaten bieten die erfindungsgemäßen Zubereitungen insbesondere folgende Vorteile:
- verbesserte Stabilität und Haltbarkeit der Zubereitungen
- höhere Wirksamkeit bei gleicher Wirkstoffkonzentration
- kürzere Einwirkzeiten
- sehr gute Wirksamkeit bei Problemkeimen wie z.B. Mykobakterien
- zum Teil synergistische Wirksamkeit
- gute bis sehr gute Materialverträglichkeit
- verringerte Flüchtigkeit der Aldehyde und dementsprechend geringere Geruchsbelästigung
- ökonomisch und ökologisch effektiverer Einsatz.

Durch die Erfindung lassen sich erstmals hochwirksame alkalische Aldehydlösungen als lagerstabile Konzentrate formulieren. Der umständliche Umgang mit Zwei-Komponenten-Systemen entfällt. Es lassen sich hochkonzentrierte Aldehydlösungen herstellen, zum Beispiel mit mehr als 50 Gew.-% Glutardialdehyd, die eine gute Stabilität aufweisen.

Der Ausdruck Stabilität bezieht sich im vorliegenden Zusammenhang sowohl auf das Aussehen der Lösungen (keine Niederschläge, Trübungen, Inhomogenitäten) als auch auf die Konstanz des pH-Wertes und die Konstanz des Aldehydgehaltes.

Das erfindungsgemäße Desinfektions- und Konservierungsmittel eignet sich als Desinfektionsmittel für Hospitäler, Arzt- und Zahnarztpraxen, öffentliche Einrichtungen, Industriebetriebe, insbesondere der Pharma- und Kosmetikindustrie, Institute und Einrichtungen der Gentechnik und Biotechnologie, Tier- bzw. Intensivtierhaltung, Pflanzenzucht, Gartenbaubetriebe u.a. Als Konservierungsmittel bietet sich die Verwendung in Kosmetika und Körperpflegemitteln, Arzneimitteln, technischen Produkten wie Farben, Dispersionen, Klebstoffen u.a. an. Bevorzugtes Einsatzgebiet ist der Bereich Instrumentendesinfektion.

Die Erfindung wird anhand der folgenden Beispiele näher erläutert. Wenn nicht anders angegeben, sind alle Teil- und Prozentangaben auf das Gewicht bezogen.

### Beispiel 1 (Vergleich)

Es wurde eine wasserarme Glutardialdehyd-Zubereitung hergestellt. Dazu wurden 114 g (1,0 Mol) 3,4-Dihydro-2-methoxy-2H-pyran auf 50°C erwärmt. Es wurden 27,0 g (1,5 Mol) voll entsalztes Wasser und 0,5 g Salzsäure (36 %-ig) zugegeben und kräftig gerührt. Die Temperatur stieg innerhalb von 20 Minuten auf 65°C, wobei der Ansatz klar wurde. Der Ansatz wurde noch solange gerührt, bis Wassermischbarkeit in jedem Verhältnis möglich war (etwa 3 Minuten). Dann wurde gekühlt und sofort mit 14,2 g Imidazol versetzt. Nach Abkühlung auf etwa 30°C wurden 9,4 g Fettalkoholethoxylat (Lutensol ON 110) und 306,6 g 1,2-Propylenglykol zugesetzt. Der Ansatz wurde gerührt, bis alles gelöst war.

Es wurde eine klare, schwach gelbliche Lösung erhalten, die in jedem Verhältnis mit Wasser mischbar war. Die Lösung roch schwach nach Glutardialdehyd. Bei der Gehaltsbestimmung (Gesamtaldehyd mit Hydroxylammoniumchlorid) wurde ein Wert von etwa 20 % Glutardialdehyd (absolut) erhalten. Bei Verdünnung von 1 Teil der so hergestellten Lösung mit 99 Teilen voll entsalztem Wasser wurde eine Lösung mit einem pH-Wert von 8,3 erhalten.

### Beispiel 2 (Vergleich)

Es wurden verschiedene Glutardialdehydlösungen mit den in Tabelle 1 angegebenen Zusammensetzungen hergestellt und auf ihre Stabilität bei 20°C untersucht. Die erhaltenen Ergebnisse sind ebenfalls in Tabelle 1 zusammengefaßt. Wie der Vergleich der Zubereitungen A und B zeigt, war bereits die mit Imidazol aktivierte und stabilisierte Lösung sehr viel stabiler als die gemäß dem Stand der Technik mit Natriumhydrogencarbonat aktivierte Lösung. Darüber hinaus bestätigen die Ergebnisse, daß wasserärmere mit Imidazol stabilisierte Glutardialdehydlösungen im Vergleich zu rein wäßrigen Glutardialdehydlösungen eine sehr viel größere Stabilität besitzen (Zubereitungen B und D gegenüber Zubereitungen C und E).

**Tabelle 1**

| | A | B | C | D | E |
|---|---|---|---|---|---|
| Glutardialdehyd (50 %) | 2,0 | 2,0 | 2,0 | 2,0 | 2,0 |
| Natriumhydrogencarbonat | 0,5 | | | | |
| Imidazol | | 0,5 | 0,5 | 0,2 | 0,2 |
| Isopropanol | 70,0 | 70,0 | | 70,0 | |
| VE-Wasser | 27,5 | 27,5 | 97,5 | 27,8 | 97,8 |

| Aussehen | unl. filtriert | klar farblos | klar farblos | klar farblos | klar farblos |
|---|---|---|---|---|---|
| pH-Wert (10 % in VE-Wasser) | 8,5 | 8,8 | 8,9 | 8,4 | 8,5 |
| GDA-Gehalt in % | 1,0 | 1,0 | 1,0 | 1,0 | 1,0 |

| Aussehen nach 7 Tagen | klar, farblos | klar, farblos | klar, farblos | klar, farblos | klar, farblos |
|---|---|---|---|---|---|
| pH-Wert (10 % in VE-Wasser) | 8,2 | 8,7 | 8,3 | 8,3 | 8,1 |
| GDA-Gehalt in % | 0,99 | 1,03 | 0,86 | 1,01 | 0,92 |
| GDA-Abfall* in % | 1,0 | -3,0 | 14,0 | -1,0 | 8,0 |

| Aussehen nach 28 Tagen | klar, farblos | klar, farblos | wenig N. farblos | klar, farblos | klar farblos |
|---|---|---|---|---|---|
| pH-Wert (10 % in VE-Wasser) | 7,8 | 8,6 | 8,0 | 8,4 | 7,8 |
| GDA-Gehalt in % | 0,89 | 0,99 | 0,73 | 1,00 | 0,82 |
| GDA-Abfall* in % | 11,0 | 1,0 | 27,0 | 0,0 | 18,0 |

| Aussehen nach 3 Monaten | klar, farblos | klar, farblos | wenig N. gelb | klar farblos | wenig N. gelblich |
|---|---|---|---|---|---|
| pH-Wert (10% in VE-Wasser) | 7,4 | 8,7 | 7,8 | 8,4 | 7,6 |
| GDA-Gehalt in % | 0,81 | 0,98 | 0,58 | 0,99 | 0,71 |
| GDA-Abfall* in % | 19,0 | 2,0 | 42,0 | 1,0 | 29,0 |

| Aussehen nach 6 Monaten | klar, farblos | klar, gelb | wenig N. gelb | klar, farblos | wenig N. gelb |
|---|---|---|---|---|---|
| pH-Wert (10 % in VE-Wasser) | 7,5 | 8,5 | 7,6 | 8,3 | 7,3 |
| GDA-Gehalt in % | 0,73 | 0,96 | 0,47 | 0,97 | 0,61 |
| GDA-Abfall* in % | 27,0 | 4,0 | 53,0 | 3,0 | 39,0 |

| Aussehen nach 1 Jahr | klar, farblos | klar, gelb | ↓N. gelb | klar, farblos | ↓gelb gelb |
|---|---|---|---|---|---|
| pH-Wert (10 % in VE-Wasser) | 7,2 | 8,0 | 7,3 | 7,8 | 6,9 |
| GDA-Gehalt in % | 0,67 | 0,95 | 0,38 | 0,97 | 0,53 |
| GDA-Abfall* in % | 33,0 | 5,0 | 62,0 | 3,0 | 47,0 |

| | | | | | |
|---|---|---|---|---|---|
| * Gegenüber dem Anfangswert VE-Wasser = vollentsalztes Wasser N = Niederschlag unl. = Unlösliches | | | | | |

### Beispiel 3 (Vergleich)

Es wurden Glutardialdehydkonzentrate mit den in Tabelle 2 angegebenen Zusammensetzungen hergestellt und auf ihre Stabilität (Lagerung im Klarglas bei 40°C) untersucht. Die erhaltenen Ergebnisse sind ebenfalls in Tabelle 2 wiedergegeben und zeigen, daß die Stabilität der Konzentrate mit abnehmendem Wassergehalt ansteigt. Außerdem zeigen die Ergebnisse, daß auch bei sehr hohen Glutaraldehydgehalten noch eine bemerkenswerte Stabilisierung mit Imidazol gelingt, wenngleich diese nicht so ausgeprägt ist wie bei den üblichen Aldehydkonzentrationen von bis zu 20 Gew.-%.

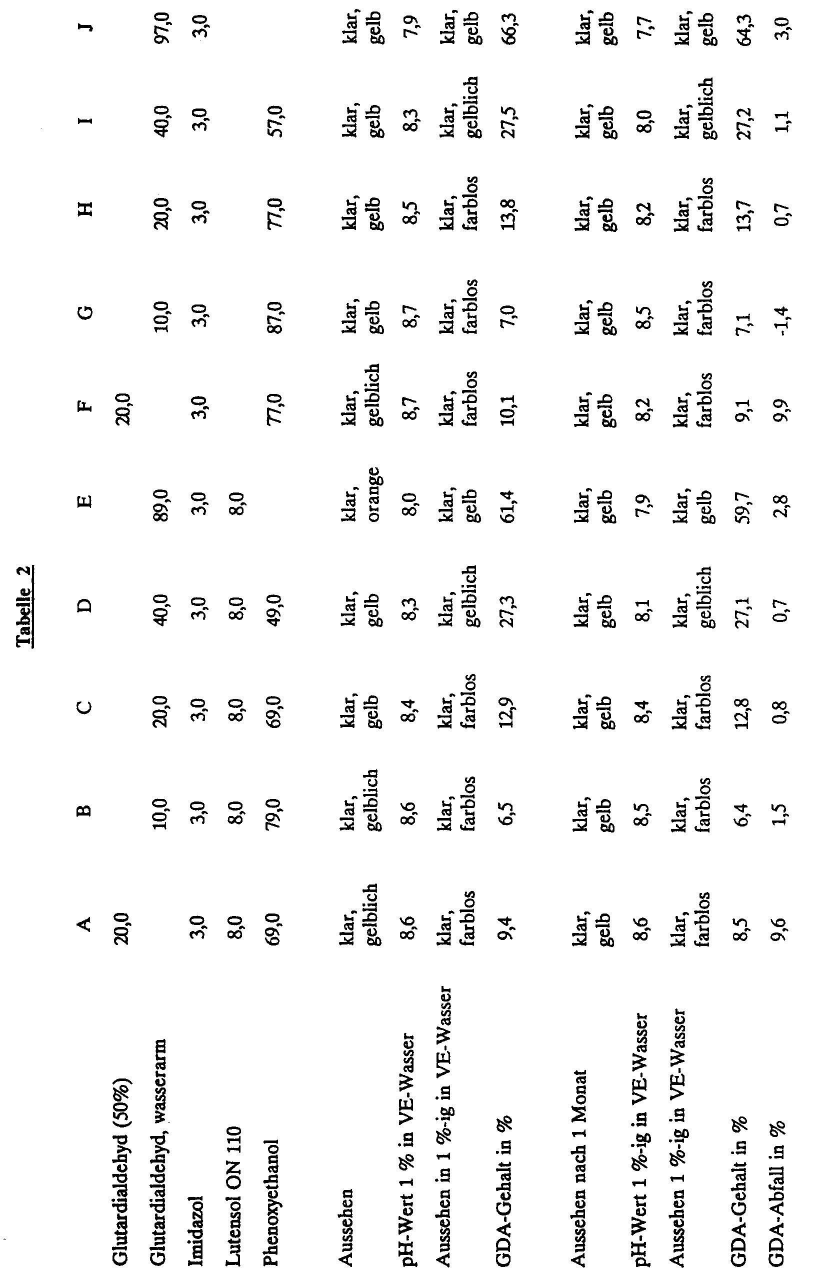

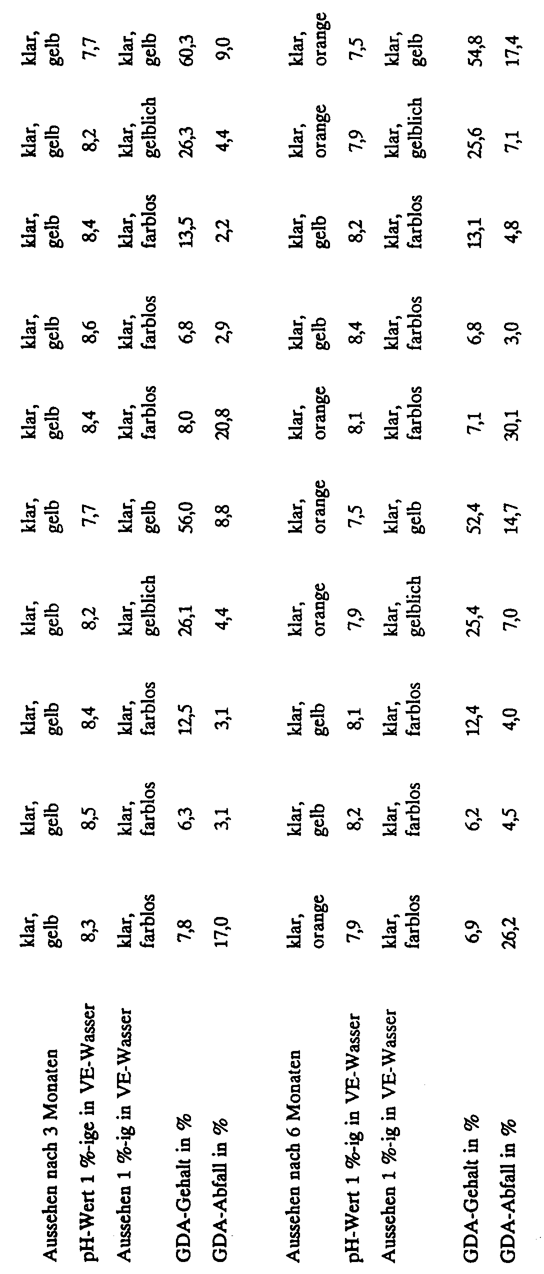

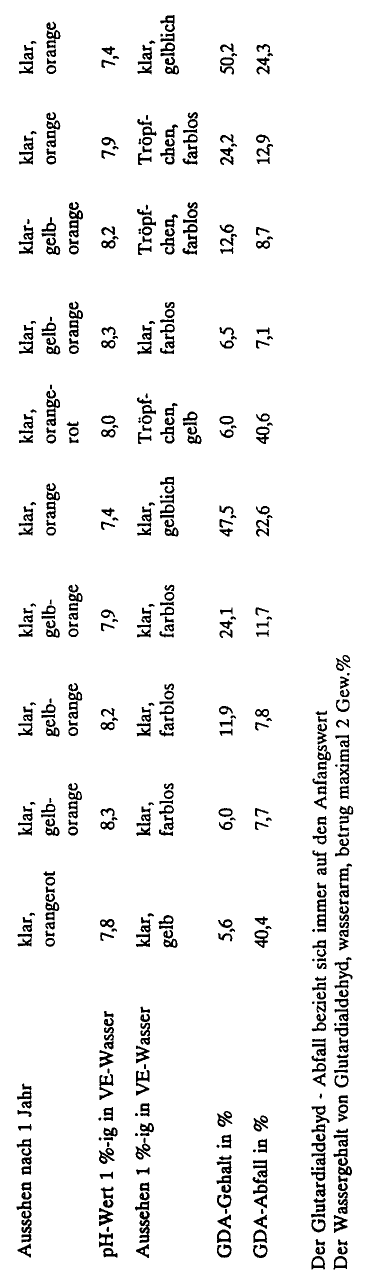

### Beispiel 4 (Vergleich)

Es wurden drei Instrumentendesinfektionsmittel aus wasserarmem Glutardialdehyd, Lutensol ON 110 und Propylenglykol (PLG) hergestellt. Das Präparat A diente als Vergleich, während die Präparate B und C mit Imidazol stabilisiert wurden. Die Präparate wurden im direkten Vergleich im Instrumentenversuch gegen Mycobact. terrae getestet. Dazu wurden frisch angesetzte Präparate und 2 Monate alte Präparate mit Wasser auf die in Tabelle 3 angegebene Einsatzkonzentration verdünnt (4 % Einsatzkonzentration bedeutet 4 Volumenteile Präparat plus 96 Volumenteile Wasser). Das 2 Monate alte Vergleichspräparat ohne Imidazol war nach 2 Monaten nicht mehr mit Wasser verdünnbar, d.h. es bildeten sich zwei Phasen, so daß keine homogene Lösung erhalten wurde. Die jeweiligen Zusammensetzungen und Ergebnisse sind in Tabelle 3 zusammengefaßt.

Die pH-Angaben in Tabelle 3 beziehen sich auf Werte von 1 %-igen Gebrauchslösungen in voll-entsalztem Wasser. Der wasserarme Glutardialdehyd wurde durch Hydrolyse von 2-Methoxy-dihydropyran hergestellt. Der Glutardialdehyd in den verschiedenen Präparaten stammte jeweils aus dem gleichen Ansatz. Bei der Konzentrationsangabe von Propylenglykol sind auch die vorhandenen Hilfsstoffe mit einbezogen worden. Dabei handelt es sich um Wasser und Methanol aus der Glutardialdehydsynthese. Der Wasseranteil dieser Hilfsstoffe betrug insgesamt weniger als 2 Gew.-%.

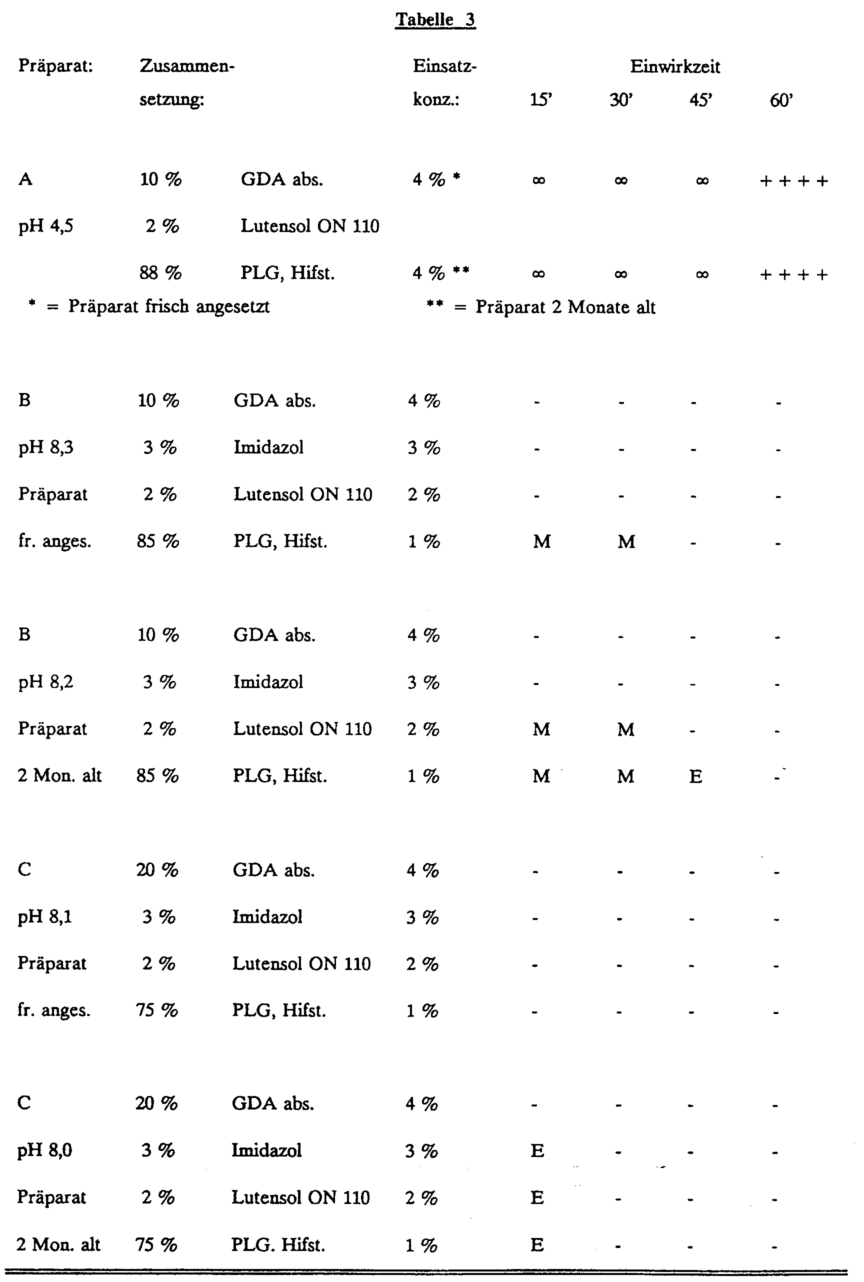

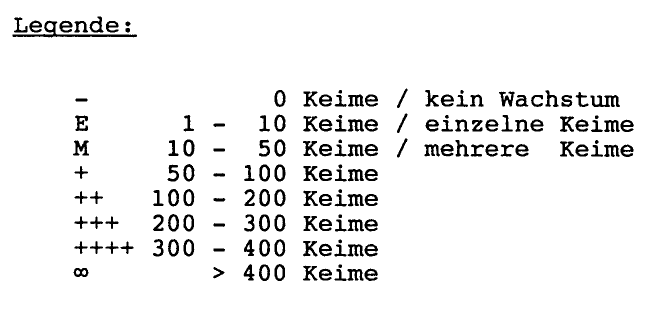

## Patentansprüche

1. Stabilisiertes aldehydisches Desinfektions- und Konservierungsmittel, dadurch gekennzeichnet, daß es als Stabilisator Imidazolderivat enthält, das Substituentengruppen mit bis zu 18 Kohlenstoffatomen aufweist und ausgewählt ist aus Alkylimidazolen, Hydroxyalkylimidazolen, Arylalkylimidazolen, Arylhydroxyalkylimidazolen, Benzimidazol, alkylsubstituierten Benzimidazolen und hydroxyalkylsubstituierten Benzimidazolen mit bis zu 6 Kohlenstoffatomen in der Alkylkette, wobei das Mittel, wenn es in Form einer Gebrauchslösung vorliegt, 0,05 bis 1 Gew.-% des Stabilisators enthält und, wenn es in Form eines Konzentrats vorliegt, 0,5 bis 5 Gew.-% des Stabilisators enthält.

2. Desinfektions- und Konservierungsmittel nach Anspruch 1, dadurch gekennzeichnet, daß es als Aldehyd Glutardialdehyd, Succindialdehyd und/oder o-Phthaldialdehyd und als Stabilisiator Alkylimidazol und/oder Hydroxyalkylimidazol enthält.

3. Desinfektions- und Konservierungsmittel nach Anspruch 1 oder 2, dadurch gekennzeichnet, daß es 0,05 bis 2 Gew.-% Aldehyd enthält.

4. Desinfektions- und Konservierungsmittel nach einem der Ansprüche 1 bis 3, dadurch gekennzeichnet, daß es Lösungsmittel enthält und der Wassergehalt weniger als 50 Gew.-% und vorzugsweise weniger als 20 Gew.-% beträgt.

5. Desinfektions- und Konservierungsmittel nach Anspruch 4, dadurch gekennzeichnet, daß das Lösungsmittel aus Alkoholen, Ethern, Acetalen und/oder Amiden ausgewählt ist.

6. Desinfektions- und Konservierungsmittel nach Anspruch 1 oder 2, dadurch gekennzeichnet, daß es als Konzentrat vorliegt und 0,1 bis 20 Gew.-%, vorzugsweise 5 bis 10 Gew.-% Aldehyd, 0,5 bis 5 Gew.-%, vorzugsweise 1 bis 3 Gew.% Stabilisator, weniger als 50 Gew.-% und vorzugsweise weniger als 5 Gew.-% Wasser und im übrigen Lösungsmittel ausgewählt aus Alkoholen, Ethern, Acetalen und/oder Amiden enthält.

7. Desinfektions- und Konservierungsmittel nach einem der Ansprüche 1 bis 6, dadurch gekennzeichnet, daß es einen pH-Wert von 3 bis 10, vorzugsweise 5 bis 9, insbesondere 6 bis 9 und besonders bevorzugt 7 bis 8,7 aufweist.

8. Desinfektions- und Konservierungsmittel nach einem der Ansprüche 1 bis 7, dadurch gekennzeichnet, daß es zusätzlich herkömmliche Alkalisierungsmittel, Hilfsstoffe, Zusatzstoffe und/oder Wirkstoffe enthält.

9. Verwendung von Imidazol und/oder Imidazolderivaten als Stabilissatoren in aldehydischen Desinfektions- und Konservierungsmitteln, wobei die Imidazolderivate Substituentengruppen mit bis zu 18 Kohlenstoffatomen aufweisen und ausgewählt sind aus Alkylimidazolen, Hydroxyalkylimidazolen, Arylalkylimidazolen, Arylhydroxyalkylimidazolen, Benzimidazol, alkylsubstituierten Benzimidazolen und hydroxyalkylsubstituierten Benzimidazolen mit bis zu 6 Kohlenstoffatomen in der Alkylkette.

## Claims

1. Stabilized aldehydic disinfectant and preservative, characterized in that it contains, as stabilizer, imidazole derivative which has substituent groups with up to 18 carbon atoms and is selected from alkyl imidazoles, hydroxyalkyl imidazoles, arylalkyl imidazoles, arylhydroxyalkyl imidazoles, benzimidazole, alkyl-substituted benzimidazoles and hydroxyalkyl-substituted benzimidazoles with up to 6 carbon atoms in the alkyl chain, said product, when it is present in the form of a ready-to-use solution, containing 0.05 to 1 wt.% of the stabilizer and, when it is present in the form of a concentrate, containing 0.5 to 5 wt.% of the stabilizer.

2. Disinfectant and preservative according to Claim 1, characterized in that it contains, as aldehyde, glutardialdehyde, succindialdehyde and/or o-phthaldialdehyde and, as stabilizer, alkyl imidazole and/or hydroxyalkyl imidazole.

3. Disinfectant and preservative according to Claim 1 or 2, characterized in that it contains 0.05 to 2 wt.% aldehyde.

4. Disinfectant and preservative according to one of Claims 1 to 3, characterized in that it contains solvent and the water content is less than 50 wt.% and preferably less than 20 wt.%.

5. Disinfectant and preservative according to Claim 4, characterized in that the solvent is selected from alcohols, ethers, acetals and/or amides.

6. Disinfectant and preservative according to Claim 1 or 2, characterized in that it is present as a concentrate and contains 0.1 to 20 wt.%, preferably 5 to 10 wt.% aldehyde, 0.5 to 5 wt.%, preferably 1 to 3 wt.% stabilizer, less than 50 wt.% and preferably less than 5 wt.% water and for the rest solvent selected from alcohols, ethers, acetals and/or amides.

7. Disinfectant and preservative according to one of Claims 1 to 6, characterized in that it has a pH value of 3 to 10, preferably 5 to 9, in particular 6 to 9 and particularly preferably 7 to 8.7.

8. Disinfectant and preservative according to one of Claims 1 to 7, characterized in that it additionally contains conventional alkalization agents, auxiliaries, additives and/or active ingredients.

9. Use of imidazole and/or imidazole derivatives as stabilizers in aldehydic disinfectants and preservatives, the imidazole derivatives having substituent groups with up to 18 carbon atoms and being selected from alkyl imidazoles, hydroxyalkyl imidazoles, arylalkyl imidazoles, arylhydroxyalkyl imidazoles, benzimidazole, alkyl-substituted benzimidazoles and hydroxyalkyl-substituted benzimidazoles with up to 6 carbon atoms in the alkyl chain.

## Revendications

1. Agent désinfectant et conservateur aldéhydique stabilisé, caractérisé en ce qu'il contient en tant que stabilisant, un dérivé d'imidazole présentant des groupes de substituants avec jusqu'à 18 atomes de carbone et choisi parmi les alkylimidazoles, hydroxyalkylimidazoles, arylalkylimidazoles, arylhydroxyalkylimidazoles, benzimidazoles, benzimidazoles alkylés et benzimidazoles hydroxyalkylés dont la chaîne alkyle comporte jusqu'à 6 atomes de carbone et où l'agent lorsqu'il est sous la forme d'une solution prête à l'emploi, renferme de 0,05 à 1 % en poids du stabilisant et, lorsqu'il est sous la forme d'un concentré, renferme de 0,5 à 5 % en poids du stabilisant.

2. Agent désinfectant et conservateur selon la revendication 1, caractérisé en ce qu'il comprend, en tant qu'aldéhyde, du glutaraldéhyde, du dialdéhyde succinique et/ou du o-phtaldialdéhyde, et, en tant que stabilisant, un alkylimidazole et/ou un hydroxyalkylimidazole.

3. Agent désinfectant et conservateur selon la revendication 1 ou 2, caractérisé en ce qu'il comprend 0,05 à 2 % en poids d'aldéhyde.

4. Agent désinfectant et conservateur selon l'une quelconque des revendications 1 à 3, caractérisé en ce qu'il comprend du solvant et que la teneur en eau est inférieure à 50 % en poids et, de préférence, inférieure à 20 % en poids.

5. Agent désinfectant et conservateur selon la revendication 4, caractérisé en ce que le solvant est choisi parmi les alcools, éthers, acétals et/ou amides.

6. Agent désinfectant et conservateur selon la revendication 1 ou 2, caractérisé en ce qu'il se trouve sous forme de concentré et qu'il comprend de 0,1 à 20 % en poids, de préférence de 5 à 10 % en poids d'aldéhyde, de 0,5 à 5 % en poids, de préférence de 1 à 3 % en poids, de stabilisant, moins de 50 %, de préférence moins de 5 % en poids d'eau, et pour le reste de solvants choisis parmi les alcools, éthers, acétals et/ou amides.

7. Agent désinfectant et conservateur selon l'une quelconque des revendications 1 à 6, caractérisé en ce qu'il présente un pH de 3 à 10, de préférence de 5 à 9, en particulier de 6 à 9 et tout particulièrement de 7 à 8,7.

8. Agent désinfectant et conservateur selon l'une quelconque des revendications 1 à 7, caractérisé en ce qu'il comprend en outre des agents alcalinisants, adjuvants, additifs et/ou ingrédients actifs classiques.

9. Utilisation de l'imidazole et/ou de dérivés de l'imidazole en tant que stabilisants dans des agents désinfectants et conservateurs aldéhydiques, dans lesquels les dérivés d'imidazole présentent des groupes de substituants pouvant comporter jusqu'à 18 atomes de carbone et sont choisis parmi les alkylimidazoles, hydroxyalkylimidazoles, arylalkylimidazoles, arylhydroxyalkylimidazoles, benzimidazoles, benzimidazoles alkylés et benzimidazoles hydroxyalkylés dont la chaîne alkyle comporte jusqu'à 6 atomes de carbone.
